# Europäisches Patentamt

# European Patent Office

# Office européen des brevets

(11) Veröffentlichungsnummer: **0 184 690**
**B1**

(12) **EUROPÄISCHE PATENTSCHRIFT**

(45) Veröffentlichungstag der Patentschrift: 02.05.90

(21) Anmeldenummer: 85114684.5

(22) Anmeldetag: 19.11.85

(51) Int. Cl.⁵: **C 01 B 25/238,**
C 01 B 25/237, C 01 B 25/46

(54) **Verfahren zur Entarsenierung von phosphorsauren Lösungen.**

(30) Priorität: 10.12.84 DE 3444975

(43) Veröffentlichungstag der Anmeldung:
18.06.86 Patentblatt 86/25

(45) Bekanntmachung des Hinweises auf die
Patenterteilung:
02.05.90 Patentblatt 90/18

(84) Benannte Vertragsstaaten:
BE DE FR GB IT NL SE

(56) Entgegenhaltungen:
EP-A-0 164 087
FR-A-2 234 228

CHEMICAL ABSTRACTS, Band 83, Nr. 10, 8.
September 1975, Seite 192, Zusammenfassung
Nr. 82176n, Columbus, Ohio, US
CHEMICAL ABSTRACTS, Band 89, Nr. 22, 27.
November 1978, Seite 109, Zusammenfassung
Nr. 481887a, Columbus, Ohio, US

(73) Patentinhaber: HOECHST
AKTIENGESELLSCHAFT
Postfach 80 03 20
D-6230 Frankfurt am Main 80 (DE)

(72) Erfinder: Schimmel, Günther, Dr.
Ehrenstrasse 16
D-5042 Erftstadt (DE)
Erfinder: Gradl, Reinhard, Dr.
Heimbacher Weg 27
D-5042 Erftstadt (DE)
Erfinder: Heymer, Gero, Dr.
Fasanenaue 12
D-5042 Erftstadt (DE)

Courier Press, Leamington Spa, England.

EP 0 184 690 B1

## Beschreibung

Vorliegende Erfindung betrifft ein Verfahren zur Entarsenierung von phosphorsauren Lösungen durch Behandeln dieser Lösungen mit einem Sulfid und Abtrennen des gebildeten Niederschlags von der gereinigten Lösung.

Bekanntlich kommt das Element Arsen wegen seiner chemischen Ähnlichkeit mit dem Phosphor vergesellschaftet mit diesem in Phosphaterzen vor, wobei die relative Häufigkeit schwanken kann (ca. 5—50 ppm As/$P_2O_5$).

Bei der Herstellung sog. thermischer Phosphorsäure, also der elektrothermischen Gewinnung von elementarem Phosphor, dessen Oxidation zu Phosphorpentoxid und Lösen des $P_2O_5$ in Wasser, bleibt das Arsen mit dem Phosphor vergesellschaftet und muß aus der fertigen Phosphorsäure entfernt werden.

Bei der Herstellung sog. Naßverfahrensphosphorsäure wird Phosphaterz mit Schwefelsäure aufgeschlossen, die Rohsäure vom Gips abgetrennt und dann die Säure je nach Verwendungszweck weitergereinigt bzw. weiterverarbeitet. In einer solchen Rohphosphorsäure findet sich die auf $P_2O_5$ bezogene Arsen-Menge des Erzes vollständig wieder. Für verschiedene Zwecke, z.B. die Düngemittel- oder Futtermittelherstellung aus solchen Säuren, ist die Arsen-Entfernung in der Regel zwingend erforderlich.

Bei der Herstellung von technisch reiner Phosphorsäure bzw. Phosphorsäure in Lebensmittelqualität aus solchen Rohphosphorsäuren durch extraktive oder auch Fällungsreinigung muß u.a. auch das Arsen entfernt werden.

Im Rahmen der Extraktionsreinigung kann diese Entarsenierung auf der Stufe der Rohsäure erfolgen oder aber erst nach erfolgter Extraktionsreinigung aus der Reinsäure bzw. gereinigten Natriumphosphatlösung.

Dazu ist anzumerken, daß sich Arsen während der eigentlichen Extraktion nicht abtrennen läßt, sondern zusammen mit der Phosphorsäure in den organischen Extrakt geht.

Zu ihrer Entarsenierung werden daher die Phosphorsäuren bekanntermaßen mit leichtlöslichen Sulfiden behandelt, um das Arsen in Form von festem Arsensulfid auszufällen und abzutrennen. Üblicherweise wird dazu ein Alkalisulfid, insbesondere Natriumsulfid verwendet (vgl. DE—A—24 29 758 und FR—A—2 234 228), häufig in Kombination mit Aktivkohle. Die normalerweise benötigten Natriumsulfid-Mengen betragen 1—2 Gew.%, bezogen auf den $P_2O_5$-Gehalt der zu entarsenierenden Lösung. Wird eine thermische oder extraktiv gereinigte Phosphorsäure entarseniert, sind die benötigten Chemikalienmengen entsprechend kleiner.

Das Verfahren der Entarsenierung von Phosphorsäure mit leicht löslichen Sulfiden besitzt aber etliche Nachteile:

1) Es ist ein relativ hoher Chemikalieneinsatz nötig.

2) Es entsteht eine hohe $H_2S$-Konzentration in und über der phosphorsauren Lösung, was wegen der Giftigkeit des Gases diverse technische Sicherungsmaßnahmen erfordert.

3) Es muß eine aufwendige Kolonnenapparatur zur wirksamen Durchführung der Reaktion eingesetzt werden.

4) Durch das lösliche Metallsulfid wird ein zusätzliches Metallkation in die phosphorsaure Lösung eingebracht, was insbesondere bei hochreiner Phosphorsäure unerwünscht ist.

Überraschenderweise wurde gefunden, daß sich die geschilderten Nachteile überwinden lassen, wenn man als Sulfid mindestens eine Verbindung der allgemeinen Formel $P_4S_x$ insbesondere $P_4S_{10}$ einsetzt, in der x für eine Zahl von 3 bis 10 steht, ohne daß eine Zusätzliche Alkalisulfich zugabe erfolgt. Eine Vereinfachung des Verfahrens ergibt sich, wenn man die Entarsenierung in Verbindung mit der Entfernung von Verunreinigungen in Form von organischen Verbindungen und/oder Sulfat aus den Lösungen durchführt. Zur Entarsenierung entweder von Phosphorsäure, welche auf elektrothermischem Wege gewonnen wurde, oder von extraktiv gereinigter Naßverfahrensphosphorsäure empfiehlt es sich, daß man nach der Behandlung der Phosphorsäure mit dem Sulfid $P_4S_x$ in die Säure ein feinteiliges festes Adsorptionsmittel, wie z.B. Diatomeenerde oder Pulveraktivkohle, einrührt.

Als weitere Möglichkeiten, das erfindungsgemäße Verfahren auszugestalten sind zu nennen, daß die Entarsenierung bei Temperaturen zwischen 20 und 100°C, vorzugsweise zwischen 50 und 80°C, durchgeführt wird, daß die Behandlung der Lösungen mit dem Sulfid in 0,5 bis 5 Stunden erfolgt und daß man zur Entarsenierung einer Rohphosphorsäure 0,05 bis 0,5 Gew% des $P_4S_x$ und zur Entarsenierung einer Reinsäure 0,01 bis 0,2 Gew% $P_4S_x$, jeweils bezogen auf den $P_2O_5$-Gehalt der phosphorsauren Lösungen, einsetzt.

Eine besonders wirkungsvolle Ausführungsform des Verfahrens besteht darin, daß man das Phosphorsulfid vor der Zugabe zur phosphorsauren Lösung mit wenig Wasser oder einer phosphorsauren Lösung anmaischt, und dann als wäßrige Suspension einsetzt.

Generell kann die Entarsenierung sowohl in Rohphosphorsäure als auch in vorgereinigter Phosphorsäure oder Phosphatsalzlösungen beliebiger $P_2O_5$-Konzentration stattfinden. Im Falle von Rohphosphorsäure kann das gebildete Arsensulfid nach Zugabe eines geeigneten Filterhilfsmittels abfiltriert werden. Dieses Filterhilfsmittel kann z.B. ein Silikat (Perlit, Diatomeenerde), eine Aktivkohle oder jeder andere, für solche Zwecke geeigneter Feststoff sein.

Wie schon erwähnte kann das Arsensulfid im Rahmen einer allgemeinen Phosphorsäure-Vorreinigung abgetrennt werden, bei welcher z.B. durch Zugabe von löslichen Erdalkaliverbindungen Verunreinigungen

2

in Form von Sulfat ausgefällt werden und/oder bei welcher die Verunreinigungen organischer Art an Aktivkohle adsorbiert werden.

Zusammenfassend besitzt das erfindungsgemäße Verfahren gegenüber bekannten Arbeitsweisen folgende Vorteile:

1) Der Chemikalieneinsatz ist äußerst gering.

2) Die entstehende $H_2S$-Konzentration ist sehr niedrig, daher ist auch die Gefahr einer möglichen Umweltgefährdung klein.

3) Wegen der langsamen $H_2S$-Entwicklung aus dem $P_4S_x$ kann die Reaktion in einem Rührkessel durchgeführt werden, was einen geringen apparativen Aufwand bedeutet.

4) Das Phosphorsulfid ist fest und seine Dosierung daher einfach.

5) Da das Phosphorsulfid zu Phosphorsäure hydrolisiert, wird kein fremder Bestandteil in die phosphorsaure Lösung eingebracht.

Die nachfolgenden Beispiele dienen zur näheren Erläuterung der Erfindung ohne diese jedoch darauf einschränken zu wollen.

Beispiele 1 bis 5 (siehe Tabelle)

Phosphorsäuren verschiedener Art werden auf 70°C aufgeheizt, mit den angegebenen Mengen $P_4S_{10}$ versetzt und eine bestimmte Zeit bei 70°C gerührt. 10 Minuten vor Ende der Reaktionszeit wird ein Filterhilfsmittel eingeführt und es wird über ein mit einer Precoat-Schicht belegtes Druckfilter filtriert. In der filtrierten Säure wird der Arsen-Gehalt bestimmt.

Beispiel 6 (siehe Tabelle)

In Abänderung von Beispiel 1 bis 5 wird eine Rohsäure mit 28,5 Gew% $P_2O_5$ (Herkunft: Südafrika), 2,4 Gew% $SO_4$ und 7 ppm As eingesetzt. Vor Zugabe des $P_4S_{10}$ wird eine dem Sulfatgehalt stöchiometrisch entsprechende Bariumcarbonat-Menge zugesetzt und das ausgefällt $BaSO_4$ als Filterhilfsmittel zur Arsenabtrennung verwendet. Die filtrierte Säure hat noch 0,01 Gew% $SO_4$.

Beispiel 7

In Abänderung von Beispiel 2 wird das Phosphorsulfid als 30 gew%ige Suspension in Wasser zu der Phosphorsäure gegeben. Nach der Filtration besitzt die entarsenierte Säure noch 0,4 ppm As.

Beispiel 8

In diesem Beispiel wird eine Entarsenierung beschrieben, die in eine komplette Rohsäure-Vorreinigung integriert ist.

Eine Rohsäure mit 52 Gew% $P_2O_5$, 2,8 Gew% $SO_4$, 550 ppm $C_{org}$ und 16 ppm As wird auf 70°C aufgeheizt, mit 0,5 Gew%/$P_2O_5$ Pulver-Aktivkohle und einer dem Sulfat-Gehalt stöchiometrisch entsprechenden Menge Kalkhydrat versetzt und eine Stunde gerührt. Dann werden 0,3 Gew% $P_4S_{10}$ (bezogen auf $P_2O_5$) zugesetzt und die Suspension eine Stunde lang gerührt. Nach erfolgter Druckfiltration besitzt die Säure 51,6 Gew% $P_2O_5$, 0,3 Gew% $SO_4$, 80 ppm $C_{org}$ und 0,2 ppm As.

Zur Rückgewinnung des im Filterkuchen enthaltenen $P_2O_5$ wird dieser im Gewichtsverhältnis 1:5 mit Reinphosphorsäure (15 Gew% $P_2O_5$) eine Stunde bis 50°C gerührt. Es wird eine Phosphorsäure abfiltriert, die 16,6 Gew% $P_2O_5$ und 0,3 ppm As enthält.

Beispiel 9 (Vergleich)

Entsprechend Beispiel 4 wird eine Entarsenierung vorgenommen, jedoch mit 0,2 Gew% (bezogen auf $P_2O_5$) an festem Natriumsulfid ($Na_2S . 9H_2O$). Nach Filtration besitzt die Säure noch 7 ppm As.

Beispiel 10

Eine extraktiv gereinigte Natriumphosphatlösung enthält 32 Gew% $P_2O_5$ und 25 ppm As bei einem Na:P-Verhältnis wie 1,33:1 (pH-Wert 5,5). Sie wird mit 0,1 Gew% $P_4S_{10}$ (bezogen auf $P_2O_5$) 3 Stunden bei 70°C gerührt, dann weitere 10 Minuten mit 0,2 Gew% Perlite. Nach Filtration besitzt die Lösung noch 0,7 ppm As.

| Beispiel | Phosphorsäure | | | Gew% $P_4S_{10}/P_2O_5$ | Filterhilfsmittel | | Rührzeit in Std. | ppm As im Filtrat |
| | Herkunft | Gew% $P_2O_5$ | ppm As | | Art | Menge Gew%/$P_2O_5$ | | |
|---|---|---|---|---|---|---|---|---|
| 1 | Rohsäure Südafrika | 51,4 | 15 | 0,2 | Perlit | 0,3 | 1 | 0,1 |
| 2 | Rohsäure Südafrika | 51,4 | 15 | 0,1 | Perlit | 0,2 | 3 | 0,8 |
| 3 | vorgereinigte, grüne Rohsäure | 49,8 | 12 | 0,2 | Perlit | 0,2 | 1 | 0,05 |
| 4 | extrakt, gereinigte Säure | 60,5 | 13 | 0,04 | Diatomeenerde | 0,4 | 1 | 0,05 |
| 5 | thermische Phosphorsäure | 54,5 | 25 | 0,1 | Pulverkohle | 0,1 | 2 | 0,05 |
| 6 | Rohsäure Südafrika | 28,5 | 7 | 0,3 | $BaSO_4$ | n.b. | 1,5 | 0,2 |

EP 0 184 690 B1

# EP 0 184 690 B1

## Patentansprüche

1. Verfahren zur Entarsenierung von phosphorsauren Lösungen durch Behandeln der Lösungen mit einem Sulfid und Abtrennen des gebildeten Niederschlags von der gereinigten Lösung, dadurch gekennzeichnet, daß man als Sulfid mindestens eine Verbindung der allgemeinen Formel $P_4S_x$ einsetzt, in der x für eine Zahl von 3 bis 10 steht, ohne daß eine zusätzliche Alkalisulfidzugabe erfolgt.

2. Verfahren nach Anspruch 1, dadurch gekennzeichnet, daß man als Sulfid $P_4S_{10}$ einsetzt.

3. Verfahren nach Anspruch 1 oder 2, dadurch gekennzeichnet, daß man die Entarsenierung in Verbindung mit der Entfernung von Verunreinigung in Form von organischen Verbindungen und/oder Sulfat aus den Lösungen durchführt.

4. Verfahren nach einem der Ansprüche 1 bis 3, dadurch gekennzeichnet, daß man zur Entarsenierung entweder von Phosphorsäure, welche auf elektrothermischem Wege gewonnen wurde, oder von extraktiv gereinigter Naßverfahrensphosphorsäure, nach der Behandlung der Phosphorsäure mit dem Sulfid $P_4S_x$ in die Säure ein feinteiliges festes Adsorptionsmittel einrührt.

5. Verfahren nach einem der Ansprüche 1 bis 4, dadurch gekennzeichnet, daß die Entarsenierung bei Temperaturen zwischen 20 und 100°C durchgeführt wird.

6. Verfahren nach Anspruch 5, dadurch gekennzeichnet, daß die Entarsenierung bei Temperaturen zwischen 50 und 80°C durchgeführt wird.

7. Verfahren nach einem der Ansprüche 1 bis 6, dadurch gekennzeichnet, daß die Behandlung der Lösungen mit dem Sulfid 0,5 bis 5 Stunden durchgeführt wird.

8. Verfahren nach einem der Ansprüche 1 bis 7, dadurch gekennzeichnet, daß man zur Entarsenierung einer Rohphosphorsäure 0,05 bis 0,5 Gew% des $P_4S_x$ und zur Entarsenierung einer Reinsäure 0,01 bis 0,2 Gew% $P_4S_x$, jeweils bezogen auf den $P_2O_5$-Gehalt der phosphorsauren Lösungen, einsetzt.

9. Verfahren nach einem der Ansprüche 1 bis 8, dadurch gekennzeichnet, daß man das Phosphorsulfid in Form einer wäßrigen Suspension einsetzt.

## Revendications

1. Procédé pour désarsénier des solutions d'acide phosphorique par traitement des solutions avec un sulfure et séparation du précipité formé de la solution purifiée, caractérisé en ce que l'on utilise comme sulfure au moins un composé de formule générale $P_4S_x$ dans laquelle x est un entier de 3 à 10 et on effectue le traitement par $P_4S_x$ sans addition supplémentaire de sulfure alcalin.

2. Procédé selon la revendication 1, caractérisé en ce que l'on utilise comme sulfure $P_4S_{10}$.

3. Procédé selon la revendication 1 ou 2, caractérisé en ce que l'on met en oeuvre la désarsénification en combinaison avec l'élimination des impuretés des solutions sous forme de composés organiques et/ou de sulfate.

4. Procédé selon l'une des revendications 1 à 3, caractérisé en ce que, pour désarsénier soit de l'acide phosphorique qui a été obtenu par voie électrothermique, soit de l'acide phosphorique du procédé humide purifié par extraction, on délaye dans l'acide, après le traitement de l'acide phosphorique par le sulfure $P_4S_x$, un agent d'adsorption solide finement divisé.

5. Procédé selon l'une des revendications 1 à 4, caractérisé en ce que l'on met en oeuvre la désarsénification à des températures comprises entre 20 et 100°C.

6. Procédé selon la revendication 5, caractérisé en ce que l'on met en oeuvre la désarsénification à des températures comprises entre 50 et 80°C.

7. Procédé selon l'une des revendications 1 à 6, caractérisé en ce que l'on met en oeuvre le traitement des solutions par le sulfure pendant 0,5 à 5 heures.

8. Procédé selon l'une des revendications 1 à 7, caractérisé en ce que l'on ajoute 0,05 à 0,5% en poids du $P_4S_x$ pour désarsénier un acide phosophrique brut et 0,01 à 0,2% en poids de $P_4S_x$ pour désarsénier un acide pur, chaque fois par rapport à la teneur en $P_2O_5$ des solutions d'acide phosphorique.

9. Procédé selon l'une des revendications 1 à 8, caractérisé en ce que l'on ajoute le sulfure de phosphore sous forme d'une suspension aqueuse.

## Claims

1. A process for removing arsenic from solutions containing phosphoric acid by treating the solutions with a sulfide and separating the precipitate formed from the purified solution, which comprises using at least one compound of the general formula $P_4S_x$ as the sulfide, in which x is a number from 3 to 10, the $P_4S_x$ treatment taking place without further addition of an alkali metal sulfide.

2. The process as claimed in claim 1, wherein $P_4S_{10}$ is used as the sulfide.

3. The process as claimed in claim 1 or 2, wherein the removal of arsenic is carried out in conjunction with the removal of impurities in the form of organic compounds and/or sulfate from the solutions.

4. The process as claimed in any of claims 1 to 3, wherein, for removing arsenic either from phosphoric acid obtained by electrothermal means or from wet-process phosphoric acid purified by extraction, a finely dispersed, solid adsorbent is stirred into the acid after the treatment of the phosphoric acid with the sulfide $P_4S_x$.

5. The process as claimed in any of claims 1 to 4, wherein the removal of arsenic is carried out at temperatures between 20 and 100°C.

6. The process as claimed in claim 5, wherein the removal of arsenic is carried out at temperatures between 50 and 80°C.

7. The process as claimed in any of claims 1 to 6, wherein the treatment of the solutions with the sulfide is carried out for 0.5 to 5 hours.

8. The process as claimed in any of claims 1 to 7, wherein 0.05 to 0.5% by weight of $P_4S_x$ are used for removing arsenic from a crude phosphoric acid and 0.01 to 0.2% by weight of $P_4S_x$ is used for removing arsenic from a pure acid, each relative to the $P_2O_5$ content of the solutions containing phosphoric acid.

9. The process as claimed in any of claims 1 to 8, wherein the phosphorus sulfide is used in the form of an aqueous suspension.